# EUROPÄISCHE PATENTSCHRIFT

(11) **EP 2 363 945 B1**
(45) Veröffentlichungstag und Bekanntmachung des Hinweises auf die Patenterteilung: **13.05.2020**
(21) Anmeldenummer: 11154614.9
(22) Anmeldetag: 16.02.2011
(51) Int. Cl.: H02M 1/32, H02M 1/36

(54) **Verfahren zum Betreiben einer elektrischen Schaltung**
Method for operating an electric circuit
Procédé de fonctionnement d'une commutation électrique

(30) Priorität: 05.03.2010 DE 102010010380
(43) Veröffentlichungstag der Anmeldung: 07.09.2011
(73) Patentinhaber: GE Energy Power Conversion GmbH, 12277 Berlin (DE)
(72) Erfinder: Dr. Brückner, Thomas, 80804 München (DE); Dr. Jakob, Roland, 12524, Berlin (DE)
(74) Vertreter: Serjeants LLP

(56) Entgegenhaltungen:
- WO-A1-2005/124961
- US-A1- 2005 281 065
- US-A1- 2008 204 959
- SINHA G ET AL: "Fault protection in a multilevel inverter implementation of a static condenser", INDUSTRY APPLICATIONS CONFERENCE, 1995. THIRTIETH IAS ANNUAL MEETING, IAS '95., CONFERENCE RECORD OF THE 1995 IEEE ORLANDO, FL, USA 8-12 OCT. 1995, NEW YORK, NY, USA,IEEE, US, Bd. 3, 8. Oktober 1995 (1995-10-08), Seiten 2557-2564, XP010193274, DOI: 10.1109/IAS.1995.530628 ISBN: 978-0-7803-3008-5
- BIN LU, SANTOSH K. SHARMA: "A Literature Review of IGBT Fault Diagnostic and Protection Methods for Power Inverters", IEEE TRANSACTIONS ON INDUSTRY APPLICATIONS, Bd. 45, Nr. 5, 2009, Seiten 1770-1777, XP002694720,
- AGUILERA R P ET AL: "Predictive control algorithm robustness for achieving fault tolerance in multicell converters", INDUSTRIAL ELECTRONICS, 2008. IECON 2008. 34TH ANNUAL CONFERENCE OF IEEE, IEEE, PISCATAWAY, NJ, USA, 10. November 2008 (2008-11-10), Seiten 3302-3308, XP031825932, ISBN: 978-1-4244-1767-4
- EFTICHIOS KOUTROULIS, JOHN CHATZAKIS, KOSTAS KALAITZAKIS, STEFANOS MANIAS, NICHOLAS C. VOULGARIS: "A system for inverter protection and real-time monitoring", MICROELECTRONICS JOURNAL, Bd. 34, Nr. 9, 2003, Seiten 823-832, XP002694721, DOI: 10.1016/S0026-2692(03)00134-4
- Faeka Khater, Mohamed ABU EL-SEBAH, Mohamed OSAMA: "Fault Diagnostics in an Inverter Feeding an Induction Motor", The International Conference on Electrical Engineering , 2008, XP002694722, Gefunden im Internet: URL:http://www.icee-con.org/papers/2008/pd f/O-011.pdf [gefunden am 2013-04-02]
- FRIEDRICH W. FUCHS: "Some Diagnosis Methods for Voltage Source Inverters in Variable Speed Drives with Induction Machines A Survey", IECON2003, 2003, XP002694723,

## Beschreibung

Die Erfindung betrifft ein Verfahren zum Betreiben einer elektrischen Schaltung nach dem Oberbegriff des Anspruchs 1.

Beispielsweise zum elektrischen Antrieb eines Elektromotors oder zum Anschluss eines Generators an ein Energieversorgungsnetz ist es bekannt, einen Stromrichter zur Erzeugung einer Wechselspannung zu verwenden. Hinsichtlich des Aufbaus des Stromrichters sind verschiedene Schaltungsvarianten bekannt, beispielsweise sogenannte Mehrpunkt-Stromrichter. Bei einem beispielhaft gewählten Dreipunkt-Stromrichter sind in jeder Phase vier Schalteinrichtungen, vorzugsweise vier IGBTs (IGBT = insulated gate bipolar transistor) mit zugehörigen Dioden in Reihe geschaltet und an eine sogenannte Zwischenkreis-Gleichspannung angeschlossen. Mit Hilfe der IGBTs und der Dioden können am Ausgang jeder Phase des Stromrichters drei Potentiale erzeugt werden, und zwar ein positives, ein negatives und ein Null-Potential. Durch eine entsprechende Ansteuerung der IGBTs können diese Potentiale zu einer Wechselspannung zusammengesetzt werden.

Im Betrieb eines derartigen Stromrichters ist es möglich, dass einer der IGBTs oder auch eine der Dioden einen Defekt erleidet und beispielsweise einen Kurzschluss bildet. In diesem Fehlerfall ist der Stromrichter nicht mehr funktionsfähig und muss abgeschaltet werden. Es sind Vorgehensweisen bekannt, einen derartigen Fehlerfall zu erkennen.

Ein Kurzschluss eines IGBTs oder einer Diode kann beispielsweise durch die Überwachung der Kollektor-Emitter-Spannung eines in demselben Kurzschlussstromkreis befindlichen anderen IGBTs erkannt werden. Dabei macht man sich die Eigenschaft eines IGBTs zu Nutze, zu entsättigen und Kurzschlussströme selbständig zu begrenzen. Eine alternative Möglichkeit besteht in der Erfassung des Kurzschlussstroms durch einen kurzgeschlossenen IGBT mittels einer am IGBT befindlichen Stromsonde.

Weiter ist bekannt, die Abschaltung des Stromrichters im Fehlerfall mit einer vorgegebenen festen Prozedur durchzuführen. Dabei wird im Falle von IGBTs derart vorgegangen, dass alle IGBTs abgeschaltet werden. Die Abschaltprozedur wird direkt nach der Erfassung des Fehlers eingeleitet, gegebenenfalls unter Einhaltung von Mindestzeiten.

Im Falle eines Dreipunkt-Stromrichters mit IGBTs wird dabei derart vorgegangen, dass die in jeder Phase des Stromrichters zuletzt eingeschaltete Schalteinrichtung zuerst wieder abgeschaltet wird. Nach Ablauf einer Mindestzeit wird anschließend die zweite in jeder Phase des Stromrichters zum Zeitpunkt des Fehlers im eingeschalteten Zustand befindliche Schalteinrichtung abgeschaltet. Diese Abschaltprozedur ist unabhängig von der Art des aufgetretenen Fehlers.

Das Dokument WO2005/124961 A1 beschreibt ein Verfahren zur Fehlerbehandlung in einer Umrichterschaltung zur Erreichung eines sicheren Betriebszustandes der Umrichterschaltung im Fehlerfall.

Das Dokument US2005/0281065 A1 beschreibt ein Verfahren zur Fehlerbehandlung in dreiphasigen mehrstufigen Brückenschaltungen.

Aufgabe der Erfindung ist es, die bekannte elektrische Schaltung im Hinblick auf die Abschaltung der Schalteinrichtungen im Fehlerfall zu verbessern.

Die Erfindung löst diese Aufgabe durch ein Verfahren nach dem Anspruch 1.

Bei dem erfindungsgemäßen Verfahren werden innerhalb der Schaltung Signale gemessen, und es wird im Fehlerfall in Abhängigkeit von den gemessenen Signalen ein Ziel-Zustand ermittelt, in den die Schaltung zum Zwecke der Beherrschung des Fehlerfalls überführt wird.

Ganz allgemein werden also bei dem erfindungsgemäßen Verfahren die über Ort und Art des Fehlers und über den Betriebszustand des Stromrichters sowie gegebenenfalls seiner Umgebung verfügbaren Informationen ausgewertet und daraus der Ziel-Zustand ermittelt, in den die Schaltung zum Zwecke der Beherrschung des Fehlerfalls überführt werden kann. In die Auswertung können dabei Fehlermeldungen der Halbleiter-Endstufen, zum Beispiel Überspannung, Halbleiter-Entsättigung, Versorgungsspannung und/oder Übertemperatur sowie gegebenenfalls weitere innerhalb und außerhalb des Stromrichters gemessene Signale, insbesondere Ströme, Spannungen, Temperaturen, Frequenzen und/oder Drehzahlen, sowie ebenfalls Steuersignale, zum Beispiel Schaltzustand und Regelgrößen, einbezogen werden.

Die Schalteinrichtungen des Stromrichters werden also nicht in einer vorgegebenen Reihenfolge abgeschaltet, sondern es wird ein von den gemessenen Signalen abhängiger Ziel-Zustand ermittelt, in den die Schaltung dann überführt wird. Der Ziel-Zustand kann dabei flexibel an den aktuellen Zustand der Schaltung angepasst werden, so dass auch der Übergang in den Ziel-Zustand flexibel ausgeführt werden kann. Die elektrische Schaltung kann damit im Fehlerfall auf eine Art und Weise in einen erwünschten Zustand überführt werden, die eine Schädigung von Bauteilen der Schaltung vermeidet.

Auf diese Weise wird erreicht, dass im Falle des Versagens eines Bauelements keine weiteren Bauelemente zerstört werden, und/oder dass durch Folgezerstörungen keine wesentlich höheren Kurzschlussströme auftreten, und/oder dass auch im Fehlerfall die Kurzschlussströme symmetriert werden können, um die negativen Auswirkungen von stark nicht-symmetrischen Kurzschlussströmen auf die angeschlossene Last zu vermindern.

Gemäß der Erfindung wird in Abhängigkeit von den gemessenen Signalen eine Reihenfolge ermittelt, mit der die Schalteinrichtungen des Stromrichters in einen dem Ziel-Zustand entsprechenden Schaltzustand überführt werden. Ausgehend von dem erwünschten Ziel-Zustand ist es damit möglich, die Schalteinrichtungen in Abhängigkeit vom aktuellen Zustand der Schaltung umzuschalten. Es kann also nicht nur der Zielzustand flexibel ermittelt werden, sondern auch die Reihenfolge der Umschaltungen der Schalteinrichtungen kann unabhängig davon flexibel bestimmt werden.

Gemäß der Erfindung werden in Abhängigkeit von den gemessenen Signalen zeitliche Abstände ermittelt, mit denen die Schalteinrichtungen des Stromrichters nacheinander in die dem Ziel-Zustand entsprechenden Schaltzustände überführt werden. Zusätzlich zu der Ermittlung des Ziel-Zustands und der Reihenfolge der Umschaltungen können somit auch die zeitlichen Abstände der Umschaltungen flexibel bestimmt werden. Dies ergibt insgesamt eine Vielzahl von Freiheitsgraden, die im Fehlerfall ausgenutzt werden können, um die elektrische Schaltung schnell und sicher in einen beherrschbaren Zustand zu überführen.

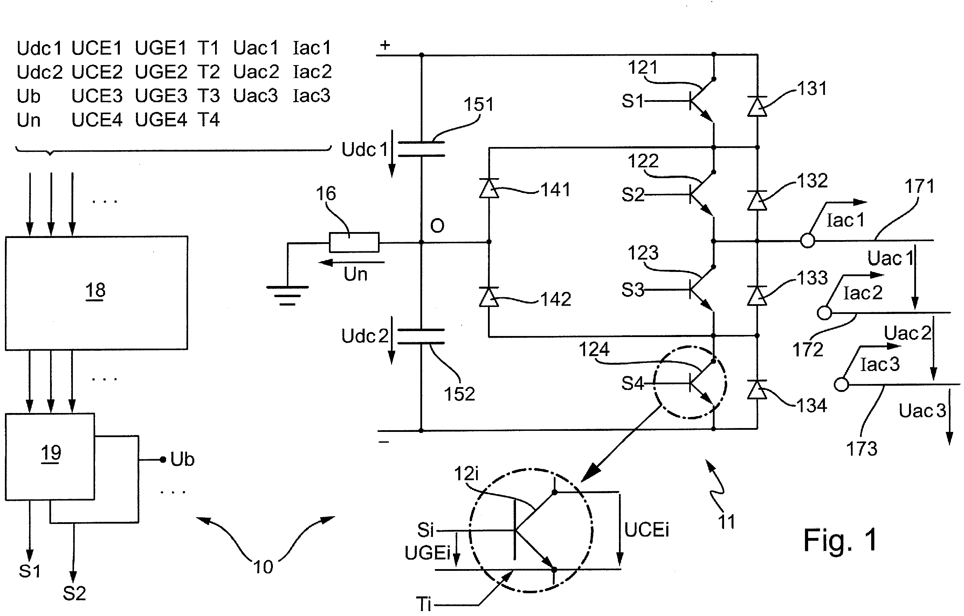

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

Die einzige Figur der Zeichnung zeigt einen schematischen Schaltplan eines Ausführungsbeispiels einer erfindungsgemäßen elektrischen Schaltung 10.

Die elektrische Schaltung 10 weist einen sogenannten Dreipunkt-NPC-Stromrichter 11 auf (NPC = neutral point clamped). Es wird ausdrücklich darauf hingewiesen, dass auch jegliche andere Art von Mehrpunkt-Stromrichtern zur Anwendung kommen kann, wie auch jegliche andere sonstige Schaltungsvariante eines Stromrichters.

Der Stromrichter 11 ist an eine Zwischenkreis-Gleichspannung Udc angeschlossen, die vorzugsweise von einem vorgeschalteten Gleichrichter erzeugt wird. Es wird ausdrücklich darauf hingewiesen, dass die Gleichspannung Udc auch auf jegliche andere Art und Weise erzeugt werden kann.

Der Stromrichter weist eine Serienschaltung von vier IGBTs 121, 122, 123, 124 auf (IGBT = insulated bipolar gate transistor), denen jeweils eine gegensinnig geschaltete Freilauf-Diode 131, 132, 133, 134 parallel geschaltet ist. Weiterhin ist den mittleren beiden IGBTs 122, 123 eine Serienschaltung aus zwei gegensinnig geschalteten Dioden 141, 142 parallel geschaltet. Zu der Serienschaltung der vier IGBTs 121, 122, 123, 124 sind zwei Kondensatoren 151, 152 parallel geschaltet.

An jedem der beiden Kondensatoren 151, 152 liegt eine Gleichspannung Udc1, Udc2 an, die jeweils etwa der Hälfte der Zwischenkreis-Gleichspannung Udc entspricht. Die beiden Gleichspannungen Udc1, Udc2 können direkt gemessen werden. Der gemeinsame Anschlusspunkt der beiden Kondensatoren 151, 152 ist als Null-Potential "0" bezeichnet. Die anderen beiden Anschlusspunkte der beiden Kondensatoren 151, 152 sind als Plus-Potential "+" und Minus-Potential "-" bezeichnet.

Der gemeinsame Anschlusspunkt der Serienschaltung der beiden Dioden 141, 142 ist mit dem Null-Potential verbunden. Weiterhin kann an diesen gemeinsamen Anschlusspunkt ein nach Erde geschalteter Widerstand 16 angeschlossen sein, um einen definierten Erdbezug herzustellen. Die Spannung Un an dem Widerstand 16 kann gemessen werden. An den gemeinsamen Anschlusspunkt der beiden mittleren IGBTs 122, 123 ist eine Ausgangsleitung angeschlossen.

Der Stromrichter 11 ist in der Figur nur einphasig dargestellt. Es versteht sich, dass bei einer mehrphasigen elektrischen Schaltung die entsprechenden elektronischen Bauteile für jede der Phasen vorhanden sind. In der Figur wird beispielhaft von einer dreiphasigen elektrischen Schaltung ausgegangen, so dass drei Ausgangsleitungen 171, 172, 173 vorhanden sind.

An den Ausgangsleitungen 171, 172, 173 ist beispielhaft eine Stromsonde angedeutet, mit der der über die jeweilige Ausgangsleitung fließende Wechselstrom Iac1, Iac2, Iac3 gemessen wird. Weiterhin können die an den jeweiligen Ausgangsleitungen anliegenden Wechselspannungen Uac1, Uac2, Uac3 gemessen werden.

An die Ausgangsleitung/en 171, 172, 173 kann eine Last angeschlossen werden.

In der Figur ist der IGBT 124 nochmals separat heraus gezeichnet. Diese separate Darstellung gilt jedoch nicht nur für den IGBT 124, sondern für jeden der vier IGBTs 121, 122, 123, 124. Dies kommt dadurch zum Ausdruck, dass in der separaten Darstellung der IGBT 124 mit dem verallgemeinerten Bezugszeichen 12i gekennzeichnet ist, wobei i = 1, 2, 3, 4 sein kann.

Aus der separaten Darstellung geht hervor, dass an dem IGBT 12i die Kollektorspannung UCEi und die Gatespannung UGEi gemessen werden können. Ebenfalls wird gegebenenfalls die Temperatur Ti des IGBT 12i gemessen. Die Art und Weise, wie diese Messungen ausgeführt werden, ist dabei beliebig. Gegebenenfalls ist jedem der vier IGBTs eine Stromsonde zugeordnet, mit der der über den IGBT fließende Strom gemessen werden kann.

Weiterhin geht aus der separaten Darstellung hervor, dass das Gate das IGBT 12i von einem Steuersignal Si angesteuert wird. Dies ist auch aus der Figur ersichtlich, wo die Steuersignale S1, S2, S3, S4 für die vier IGBTs 121, 122, 123, 124 ebenfalls eingetragen sind.

In der Figur ist ein Steuergerät 18 dargestellt, an das über Eingangsleitungen eine Vielzahl von Signalen übertragen werden. Beispielhaft werden die Signale für die Gleichspannungen Udc1, Udc2 und die Wechselströme Iac1, Iac2, Iac3, die Wechselspannungen Uac1, Uac2, Uac3, die Kollektorspannungen UCEi, die Gatespannungen UGEi, die Spannung Un und die Temperaturen Ti der IGBTs 12i zugeführt. Über Ausgangsleitungen übermittelt das Steuergerät 18 eine Steuerinformation an nachgeordnete Endstufen 19.

Bei dem Steuergerät 18 kann es sich um ein digitales Rechengerät handeln, das in Abhängigkeit von einem Computerprogramm die über die Eingangsleitungen erhaltenen Signale verarbeitet und in Abhängigkeit davon die über die Ausgangsleitungen zur Verfügung gestellte Steuerinformation erzeugt.

Bei den Endstufen 19 kann es sich um analoge oder diskrete Schaltungen handeln, die die Steuerinformation empfangen und in die elektrischen Steuersignale S1, S2, S3, S4 umsetzen, mit denen dann die Gates der IBGTs 12i angesteuert werden. Die Endstufen 19 werden jeweils von einer Versorgungsspannung Ub mit Energie versorgt. Diese Versorgungsspannung Ub wird gemessen und ist über eine Eingangsleitung dem Steuergerät 18 zugeführt.

Bei der Steuerinformation kann es sich um jegliches digitales oder analoges Signal handeln, mit dem ein bestimmter Schaltzustand der Steuersignale S1, S2, S3, S4 sowie ein bestimmter zeitlicher Übergang in diesen Schaltzustand festgelegt werden kann.

Von dem Steuergerät 18 werden die an den Eingangsleitungen anliegenden Signale fortlaufend überwacht. Dabei werden die empfangenen aktuellen Istwerte der Spannungen, Ströme und Temperaturen mit vorgegebenen Sollwerten verglichen, die mit Hilfe von theoretischen Berechnungen oder praktischen Messungen vorab ermittelt worden sind, und die einen fehlerfreien Betriebszustand charakterisieren.

Weichen ein oder mehrere Istwerte um vorgegebene Schwellwerte von den zugehörigen Sollwerten ab, so leitet das Steuergerät 18 daraus ab, dass aktuell ein Fehlerfall aufgetreten ist. Es wird ausdrücklich darauf hingewiesen, dass ein aufgetretener Fehlerfall auch auf eine andere Art und Weise erkannt werden kann. Diese Erkennung kann auch unabhängig von dem Steuergerät 18 erfolgen, um dann dem Steuergerät 18 über eine Eingangsleitung mitgeteilt zu werden.

Liegt ein Fehlerfall vor, so wird von dem Steuergerät 18 das folgende Verfahren ausgeführt:
In einem ersten Schritt wird der aktuelle Zustand der elektrischen Schaltung 10 ermittelt und abgespeichert. Es werden also ein Teil oder all diejenigen Spannungen, Ströme, Temperaturen und Signale erfasst, die in demjenigen Zeitpunkt vorhanden waren, in dem der Fehlerfall aufgetreten ist. Im vorliegenden, in der Figur dargestellten Ausführungsbeispiel handelt es sich dabei um die Gleichspannungen Udc1, Udc2, um die Spannung Un, um die Versorgungsspannung Ub, um die Wechselströme Iac1, Iac2, Iac3, um die Wechselspannungen Uac1, Uac2, Uac3, um die Kollektorspannungen UCEi, um die Gatespannungen UGEi, um die Temperaturen Ti der IGBTs 12i sowie um die Steuersignale Si, mit denen die IGBTs in dem genannten Zeitpunkt angesteuert worden sind. Die Steuersignale Si repräsentieren dabei die aktuellen Schaltzustände der IGBTs 12i.

In einem zweiten Schritt wird ein Ziel-Zustand ermittelt, in den die elektrische Schaltung 10 zum Zwecke der Beherrschung des Fehlerfalls übergeführt werden soll. Bei dem Ziel-Zustand handelt es sich um bestimmte Ziel-Schaltzustände der IGBTs 121, 122, 123, 124.

Der Ziel-Zustand wird in Abhängigkeit von einem Teil oder allen abgespeicherten Werten des aktuellen Zustands ermittelt.

So ist es möglich, dass aus der Kollektorspannung UCE eines leitend geschalteten IGBTs 12i abgeleitet wird, ob sich der IGBT 12i in einem entsättigten Zustand befindet. Ist dies der Fall, so kann daraus geschlossen werden, dass durch den IGBTi ein Kurzschlussstrom fließt. Alternativ kann dies auch mit Hilfe der erwähnten, dem IGBTi zugeordneten Stromsonde bzw. dem gemessenen Strom ermittelt werden.

Ebenfalls ist es möglich, dass aus der Kollektorspannung UCEi eines sperrend geschalteten IGBTs 12i abgeleitet wird, ob die Zwischenkreis-Gleichspannung Udc zu hoch oder zu niedrig ist. Dies kann alternativ oder zusätzlich auch aus den Messungen der Gleichspannungen Udc1, Udc2 abgeleitet werden.

Aus den gemessenen Kollektorspannungen UCEi und den zugehörigen Strömen kann ermittelt werden, in welchen Pfaden ein Strom fließt und ob gegebenenfalls ein oder mehrere Bauelemente defekt sind.

Aus der Versorgungsspannung Ub kann abgeleitet werden, ob die Endstufe 19 mit einer ausreichenden Spannung versorgt wird, und ob damit die Steuersignale S1, S2, S3, S4 insoweit gegebenenfalls fehlerhaft sind.

Aus der gemessenen Gatespannung UGEi kann ermittelt werden, ob einer der IGBTs 12i zerstört ist und seine Steuerbarkeit verloren hat.

Aus der am Widerstand 16 anliegenden Spannung Un kann abgeleitet werden, ob ein
sogenannter Erdschluss vorliegt.

Hierzu ist es gegebenenfalls erforderlich, die Spannung Un über der Zeit zu mitteln. Alternativ ist es möglich, mit Hilfe beispielsweise einer Stromsonde den über den Widerstand 16 fließenden Strom zu ermitteln.

Weiterhin kann aus den Wechselspannungen und Wechselströmen auf den Ausgangsleitungen abgeleitet werden, ob ein Fehler beim Betrieb der Schaltung 10 mit angeschlossener Last vorliegt oder nicht. Entsprechendes gilt für die Temperaturen Ti der IGBTs 12i.

Die Ermittlung des Ziel-Zustands kann beispielsweise mit Hilfe einer Tabelle erfolgen, in der ein Teil oder alle möglichen Kombinationen der Werte des aktuellen Zustands enthalten sind, und in der zu jeder möglichen Kombination ein bestimmter Ziel-Schaltzustand für die Schalteinrichtungen angegeben ist. Dieser bestimmte Ziel-Schaltzustand wird dabei vorab anhand von theoretischen Berechnungen und/oder praktischen Versuchen ermittelt.

Ebenfalls ist es möglich, dass die Ermittlung des Ziel-Zustands mit Hilfe eines Entscheidungsbaums durchgeführt wird. Hierzu werden nacheinander bestimmte Werte des aktuellen Zustands dazu herangezogen, um jeweils eine Entscheidung über das weitere Vorgehen in dem Entscheidungsbaum zu treffen. Auf diese Weise wird dann am Ende des Entscheidungsbaums der erwünschte Ziel-Schaltzustand erreicht.

Es versteht sich, dass auch andere Möglichkeiten denkbar sind, mit denen der Ziel-Zustand ermittelt werden kann. Ebenfalls versteht es sich, dass die erläuterten Möglichkeiten auch miteinander kombiniert werden können.

Der Ziel-Zustand kann im Verlauf der Fehlerbehandlung korrigiert werden.

In einem dritten Schritt wird ermittelt, wie die Schaltung 10 von dem aktuellen Zustand in den Ziel-Zustand am besten überführt werden kann. Hierzu wird einerseits ermittelt, in welcher Reihenfolge die Steuersignale Si am besten verändert werden, um von den aktuellen Schaltzuständen der IGBTs 12i in die erwünschten Ziel-Schaltzustände zu gelangen. Andererseits wird ermittelt, in welchen zeitlichen Abständen die Veränderungen der Schaltzustände der IGBTs 12i nacheinander am besten vorgenommen werden.

Die Ermittlung der Reihenfolge, mit der die Steuersignale Si verändert werden, ist dabei abhängig von dem aktuellen Zustand und dem Ziel-Zustand der Schaltung 10. Für den Übergang von einem bestimmten aktuellen Zustand in einen bestimmten Ziel-Zustand können ein oder mehrere unterschiedliche Reihenfolgen möglich sein. Diese Möglichkeiten können vorab ermittelt werden und in dem Steuergerät 18 abgespeichert sein. Sind mehrere Möglichkeiten für den Übergang vorhanden, so kann vorab eine dieser Möglichkeiten als beste Möglichkeit festgelegt werden. Alternativ ist es möglich, dass im Betrieb der Schaltung 10 anhand der im ersten Schritt ermittelten Spannungen, Ströme und Temperaturen gegebenenfalls mit Hilfe weiterer Berechnungen entschieden wird, welche der vorhandenen Möglichkeiten aktuell die beste Möglichkeit darstellt. Ist nur eine mögliche Reihenfolge für den Übergang von einem bestimmten aktuellen Zustand in einen bestimmten Ziel-Zustand vorhanden, so stellt diese Reihenfolge gleichzeitig die beste Möglichkeit dar.

Die Ermittlung der zeitlichen Abstände, in denen die aufeinander folgenden Veränderungen der Schaltzustände der IGBTs 12i am besten vorgenommen werden, ist ebenfalls abhängig von dem aktuellen Zustand und dem Ziel-Zustand der Schaltung 10. Für den Übergang von einem bestimmten aktuellen Zustand in einen bestimmten Ziel-Zustand können diese zeitlichen Abstände im Betrieb der Schaltung 10 anhand der im ersten Schritt ermittelten Spannungen, Ströme und Temperaturen gegebenenfalls mit Hilfe weiterer Berechnungen ermittelt werden. Gegebenenfalls können die zeitlichen Abstände von bestimmten Veränderungen der Schaltzustände der IGBTs 12i auch vorab festgelegt werden.

Hat das Steuergerät 18 die Reihenfolge der Übergänge der Schaltzustände der IGBTs 12i sowie die zeitlichen Abstände der Veränderungen dieser Schaltzustände ermittelt, so erzeugt das Steuergerät daraus die bereits erwähnte Steuerinformation. Diese Steuerinformation wird an die Endstufe 19 übertragen und wird dort in entsprechende Steuersignale Si für die IGBTs 12i umgesetzt. Die Reihenfolge der Veränderungen dieser Steuersignale Si entspricht dabei der vom Steuergerät 18 ermittelten Reihenfolge. Entsprechendes gilt für die zeitlichen Abstände der genannten Veränderungen. Die IGBTs 12i werden somit schließlich in der ermittelten Reihenfolge und mit den ermittelten zeitlichen Abständen von ihren aktuellen Schaltzuständen in die Ziel-Schaltzustände umgeschaltet. Nach diesen Umschaltungen befindet sich die elektrische Schaltung 10 in dem im zweiten Schritt ermittelten Ziel-Zustand.

Wie erwähnt wurde, kann die Zwischenkreis-Gleichspannung Udc beispielsweise von einem Gleichrichter erzeugt werden. In diesem Fall ist es möglich, dass der Gleichrichter aus einer Schaltung aufgebaut ist, die der elektrischen Schaltung 10 entspricht. Es versteht sich, dass das erläuterte Verfahren auch auf eine derartige, bei einem Gleichrichter verwendete Schaltung angewendet werden kann.

Die elektrische Schaltung 10 kann beispielsweise im Zusammenhang mit dem Antrieb eines Elektromotors im Mittelspannungsbereich zum Einsatz kommen. In diesem Fall ist üblicherweise eine Serienschaltung aus einem am Energieversorgungsnetz anliegenden Leistungsschalter, einem Transformator, dem bereits erwähnten Gleichrichter, der elektrischen Schaltung 10, einem gegebenenfalls vorhandenen Trennschalter und dem anzutreibenden Elektromotor vorhanden. Zusätzlich zu dem bisher erläuterten Verfahren ist es bei einem derartigen Anwendungsfall möglich, dass das Steuergerät 18 im Fehlerfall auch den Leistungsschalter und/oder den Trennschalter ansteuert und gegebenenfalls umschaltet.

Weiterhin ist es möglich, dass bei diesem Anwendungsfall bestimmte Steuerungs- und/oder Regelungskonzepte für die Ansteuerung des Elektromotors in dem Steuergerät 18 vorhanden sind. Diese Steuerungs- und/oder Regelungskonzepte können bei der Ermittlung des Ziel-Zustands sowie bei der Ermittlung der Reihenfolge der Umschaltungen und/oder bei der Ermittlung der zeitlichen Abstände der Umschaltungen berücksichtigt werden.

Es wird ausdrücklich darauf hingewiesen, dass die vorstehende Aufteilung des erläuterten Verfahrens in bestimmte Schritte nur dem Zwecke einer besseren Verständlichkeit dienen soll. Es versteht sich, dass die erläuterte Abfolge der Schritte gegebenenfalls auch anders ausgeführt werden kann. Ebenfalls versteht es sich, dass die erläuterten Schritte derart miteinander verwoben sein können, dass sie einzeln nicht mehr identifizierbar sind. Letztlich ist nur das Ergebnis des Verfahrens ausschlaggebend, nämlich dass ein Ziel-Zustand ermittelt wird, dass eine bestimmte Reihenfolge für die Veränderungen der Schaltzustände der IGBTs ermittelt wird, und dass bestimmte zeitliche Abstände für diese Veränderungen ermittelt werden.

## Patentansprüche

1. Verfahren zum Betreiben einer elektrischen Schaltung (10), wobei die Schaltung(10) einen Stromrichter (11) mit einer Mehrzahl von Schalteinrichtungen aufweist, und wobei bei dem Verfahren ein Fehlerfall der Schaltung (10) erkannt wird, wobei innerhalb der Schaltung (10) Signale gemessen werden, und wobei im Fehlerfall in Abhängigkeit von den gemessenen Signalen ein Ziel-Zustand der Schaltung (10) ermittelt wird, in den die Schaltung (10) zum Zwecke der Beherrschung des Fehlerfalls überführt wird, wobei in Abhängigkeit von den gemessenen Signalen eine Reihenfolge ermittelt wird, mit der die Schalteinrichtungen des Stromrichters (11) in einen dem Ziel-Zustand der Schaltung (10) entsprechenden Ziel-Schaltzustand der Schalteinrichtungen überführt werden, und wobei in Abhängigkeit von den gemessenen Signalen zeitliche Abstände ermittelt werden, mit denen die Schalteinrichtungen des Stromrichters (11) nacheinander in die dem Ziel- Zustand der Schaltung (10) entsprechenden Ziel-Schaltzustände überführt werden.

2. Verfahren nach Anspruch 1, wobei die von dem Stromrichter (11) erzeugte Wechselspannung (Uacl, Uac2, Uac3) und/oder die erzeugten Wechselströme (Iacl, Iac2, Iac3) gemessen werden.

3. Verfahren nach einem der vorstehenden Ansprüche, wobei die Schalteinrichtungen als IGBTs (12i) ausgebildet sind, und wobei die Kollektorspannungen(UCEi) und/oder die Gatespannungen (UGEi) der IGBTs (12i) gemessen werden.

4. Verfahren nach einem der vorstehenden Ansprüche, wobei die Temperaturen (Ti) der IGBTs (12i) gemessen und bei der Ermittlung des Ziel-Zustands und/oder der Reihenfolge und/oder der zeitlichen Abstände berücksichtigt werden.

5. Verfahren nach einem der vorstehenden Ansprüche, wobei ein Null-Potential des Stromrichters(11) über einen Widerstand (16) geerdet ist, und wobei die Spannung (Un) an und/oder der Strom über den Widerstand (16) gemessen wird.

6. Verfahren nach einem der vorstehenden Ansprüche, wobei der Stromrichter (11) an ein oder mehrere Kondensatoren (151, 152) angeschlossen ist, und wobei die Gleichspannungen (Udcl, Udc2) an den Kondensatoren (151, 152) gemessen werden.

7. Verfahren nach einem der vorstehenden Ansprüche, wobei die Schalteinrichtungen von mindestens einer mit einer Versorgungsspannung (Ub) betriebenen Endstufe (19) angesteuert werden, und wobei die Versorgungsspannung (Ub) gemessen und bei der Ermittlung des Ziel-Zustands und/oder der Reihenfolge und/oder der zeitlichen Abstände berücksichtigt wird.

8. Verfahren nach einem der vorstehenden Ansprüche, wobei außerhalb der Schaltung (10) gemessene Signale bei der Ermittlung des Ziel-Zustands berücksichtigt werden.

9. Verfahren nach einem der vorstehenden Ansprüche, wobei andere, zur Verfügung stehende Informationen über den Zustand des Stromrichters (11) und/oder seiner Umgebung bei der Ermittlung des Ziel-Zustands berücksichtigt werden.

10. Verfahren nach einem der vorstehenden Ansprüche, wobei ein Leistungsschalter und/oder ein Trennschalter mit dem Stromrichter (11) verschaltet ist, und wobei der Leistungsschalter und/oder der Trennschalter in Abhängigkeit von den gemessenen Signalen umgeschaltet wird.

11. Verfahren nach einem der vorstehenden Ansprüche, wobei das Verfahren im Zusammenhang mit dem Antrieb eines Elektromotors insbesondere im Mittelspannungsbereich eingesetzt wird.

## Claims

1. Method for operating an electric circuit (10), wherein the circuit (10) has a converter (11) with a plurality of switching devices, and wherein in the method a fault in the circuit (10) is identified, wherein inside the circuit (10) signals are measured and wherein in the case of a fault as a function of the measured signals a target state of the circuit (10) is determined, into which the circuit (10) is transferred for the purpose of correcting the fault, wherein as a function of the measured signals a sequence is determined, by which the switching devices of the converter (11) are transferred into a target state of the switching devices corresponding to the target state of the circuit (10), and wherein as a function of the measured signals time intervals are determined, by means of which the switching devices of the converter (11) are transferred successively into the target switching states corresponding to the target state of the circuit (10).

2. Method according to claim 1, wherein the alternating voltage (Uacl, Uac2, Uac3) generated by the converter (11) and/or the generated alternating currents (Iac1, Iac2, lac3) are measured.

3. Method according to any of the preceding claims, wherein the switching devices are in the form of IGBTs (12i), and wherein the collector voltage (UCEi) and/or the gate voltage (UGEi) of the IGBTs (12i) are measured.

4. Method according to any of the preceding claims, wherein the temperatures (Ti) of the IGBTs (12i) are measured and are considered when determining the target state and/or the sequence and/or the time intervals.

5. Method according to any of the preceding claims, wherein a zero-potential of the converter (11) is earthed by a resistor (16), and wherein the voltage (Un) at and/or the current through the resistor (16) is measured.

6. Method according to any of the preceding claims, wherein the converter (11) is connected to one or more capacitors (151, 152), and wherein the DC voltage (Udc1, Udc2) is measured at the capacitors (151, 152).

7. Method according to any of the preceding claims, wherein the switching devices are controlled by at least one output stage (19) operated by a supply voltage (Ub), and wherein the supply voltage (Ub) is measured and is considered when determining the target state and/or the sequence and/or the time intervals.

8. Method according to any of the preceding claims, wherein signals measured outside the circuit (10) are taken into consideration when determining the target state.

9. Method according to any of the preceding claims, wherein other available information about the state of the converter (11) and/or its environment is taken into consideration when determining the target state.

10. Method according to any of the preceding claims, wherein a circuit breaker and/or a disconnector is connected to the converter (11), and wherein the circuit breaker and/or the disconnector is switched as a function of the measured signals.

11. Method according to any of the preceding claims, wherein the method is used in connection with the drive of an electric motor in particular in the medium-voltage range.

## Revendications

1. Procédé pour faire fonctionner un circuit électrique (10), où le circuit (10) présente un convertisseur (11) avec une pluralité de dispositifs de commutation, et où, dans la procédé, un cas de défaut du circuit (10) est reconnu, où, dans le circuit (10) des signaux sont mesurés, et où en cas de défaut, en fonction des signaux mesurés, un état cible du circuit (10) est établi, dans lequel le circuit (10) est mis afin de maîtriser le cas de défaut, où, en fonction des signaux mesurés, une séquence est établie, avec laquelle les dispositifs de commutation du convertisseur (11) sont mis dans un état de commutation cible des dispositifs de commutation correspondant à l'état cible du circuit (10), et où, en fonction des signaux mesurés, des intervalles de temps sont établis, avec lesquels les dispositifs de commutation du convertisseur (11) sont mis l'un après l'autre dans les états de commutation cibles correspondant à l'état cible du circuit (10).

2. Procédé selon la revendication 1, où la tension alternative (Uacl, Uac2, Uac3) générée par le convertisseur (11) et/ou les courants alternatifs (Iac1, Iac2, Iac3) générés sont mesurés.

3. Procédé selon l'une des revendications précédentes, où les dispositifs de commutation sont configurés comme des IGBT (12i), et où les tensions de collecteur (UCEi) et/ou les tensions de grille (UGEi) des IGBT (12i) sont mesurées.

4. Procédé selon l'une des revendications précédentes, où les températures (Ti) des IGBT (12i) sont mesurées et prises en considération lors de l'établissement de l'état cible et/ou de la séquence et/ou des intervalles de temps.

5. Procédé selon l'une des revendications précédentes, où un potentiel zéro du convertisseur (11) est mis à la terre à travers une résistance (16), et où la tension (Un) sur et/ou le courant à travers la résistance (16) est mesuré(e).

6. Procédé selon l'une des revendications précédentes, où le convertisseur (11) est raccordé à un ou plusieurs condensateurs (151, 152), et où les tensions continues (Udc1, Udc2) sur les condensateurs (151, 152) sont mesurées.

7. Procédé selon l'une des revendications précédentes, où les dispositifs de commutation sont excités par au moins un étage de sortie (19) alimenté par une tension d'alimentation (Ub), et où la tension d'alimentation (Ub) est mesurée et prise en considération lors de l'établissement de l'état cible et/ou de la séquence et/ou des intervalles de temps.

8. Procédé selon l'une des revendications précédentes, où en dehors du circuit (10) des signaux mesurés sont pris en considération lors de l'établissement du l'état cible.

9. Procédé selon l'une des revendications précédentes, où d'autres informations disponibles sur l'état du convertisseur (11) et/ou de son environnement sont prises en considération lors de l'établissement de l'état cible.

10. Procédé selon l'une des revendications précédentes, où un disjoncteur et/ou un sectionneur est connecté au convertisseur (11), et où le disjoncteur et/ou le sectionneur est commuté en fonction des signaux mesurés.

11. Procédé selon l'une des revendications précédentes, où le procédé est mis en œuvre en liaison avec l'entraînement d'un moteur électrique, en particulier dans le domaine de la moyenne tension.
